# EUROPEAN PATENT APPLICATION

(11) **EP 1 197 897 A1**
(43) Date of publication of application: **17.04.2002**
(21) Application number: 01301040.0
(22) Date of filing: 06.02.2001
(51) Int. Cl.: G06F 17/60

(54) **Method and system for displaying custom-made product specification information, server and terminal for the system, and method of selecting custom-made product specifications**

(30) Priority: 09.06.2000 JP 2000173083
(71) Applicant: FUJITSU LIMITED, Kawasaki-shi, Kanagawa 211-8588 (JP)
(72) Inventor: Nishimura, Tomoki, c/o Fujitsu Limited, Kawasaki-shi, Kanagawa 211-8588 (JP)
(74) Representative: Stebbing, Timothy Charles

(57) **Abstract**

A network-based system enabling a customer at a terminal (20) to select specifications of a custom-made product, such as a PC. A server (10) supplies to the terminal information on optional items, such as a type of display to be selected, so that the appearance of the items is shown on the terminal display (21). This allows the customer to compare the appearance of various optional items and assess their effect on the overall appearance of the product. The system may be applied to the sale of PCs over the Internet (30) from a manufacturer's website.

## Description

The present invention relates to a technology for a commodity, especially a custom-made product having specifications selected by a customer (e. g., a custom-made personal computer) put on the market via the Internet. More particularly, the present invention relates to a method of a system for displaying custom-made product specifications information on a customer terminal, and a manufacturer server and a customer terminal for use in the system. The present invention also relates to a method of selecting custom-made product specifications.

Recently, a drastically increased number of commodities are put on the market via the Internet. When purchasing a commodity over the Internet, a purchase applicant (a customer) connects a personal computer (hereinafter also called a PC) to the Internet via a communication line. The PC then displays a commodity market site provided by a commodity seller such as a manufacturer.

If the commodity is an all-in-one-type (ready-made) PC, all the PCs to be sold are displayed at once in the commodity market site.

If the commodity is a custom-made product, where the purchase applicant selects specifications (functions) in accordance with their requirements and available money, the available specifications (e.g., a type of CPU, capacities of the memory and the hard disk, a type of the display device) are displayed in the form of a list of character information (text).

A specification important to the appearance of the custom-made product is the type of the display to be selected by the prospective purchaser. However, the above-described known commodity market site only provides textual information about the specifications.

Accordingly, the prospective purchaser (purchase applicant) can only imagine the appearance and the installation image of the PC having specifications selected by himself /herself based on the combination of the body of PC and the type of the selected display.

The list of the specifications displayed usually is organised by specification kind and specification type. The specification kinds indicate names of components, such as a CPU, a memory, a hard disk and a display. The specification types indicate a plurality of candidates (e.g. sizes or capacities) for every specification type. The specification types (candidates for forthcoming selection) of a specification kind "display" are "15-inch LCD", "15-inch CRT", "17-inch CRT" and "No display".

In a known displaying method, one specification type (a candidate preset as a default value or a candidate selected by the purchase applicant) is displayed with respect to each specification kind on the list.

When selecting from the candidates, the purchase applicant has to click a selecting button corresponding to the target specification kind to list all the candidates in a pull-down menu.

Since, in the known displaying manner, the specification information is displayed in the form of character information when selling a custom-made product (a custom-made PC) via the Internet, it is difficult for the purchase applicant to grasp how the appearance image and the installation image of the custom-made product are affected by the selected specifications. The purchase applicant tends to regard appearance and the installation image as important. In the known displaying method, the purchase applicant has to imagine how the combination of a selected PC body and a selected display will look. Accordingly, the commodity actually purchased may look different from how it was imagined.

Further, as mentioned above, the purchase applicant has to click a selecting button corresponding to the target specification kind to display the candidates in a pull-down menu. Since it is difficult for the purchase applicant to recognize all the candidates, an increased amount of time has to be taken to combine the various specification types for every specification kind. Furthermore, it is difficult to select specifications so as to satisfy the balance of functions (for example, selecting capacities of the memory and the hard disk in accordance with the performance of the CPU) of the PC.

With the foregoing problems in view, it is desirable to provide an improved method of displaying custom-made product specifications information.

Embodiments of the invention provide a system, a server and a terminal for carrying out the above-mentioned method.

The present invention may further provide a method of selecting custom-made product specifications.

With these methods, this system and this server, it is possible for a purchase applicant to select desired specifications with ease, visualizing the actual appearance. It is also possible to avoid the mismatch between the appearance of an actually purchased commodity and that imagined by the purchase candidate. It is further possible to select the specifications with ease, understanding all the candidates and considering the balance of the entire custom-made product.

According to one aspect of the present invention, there is provided a method of displaying, on a display section of a customer terminal, specifications information about various kinds of specifications of a custom-made product upon receipt of the specifications information from a server via a communications network, comprising the steps of: at the server, for appearance specifications which have an effect on appearance of a prospective custom-made product and have a plurality of candidates for forthcoming selection, storing in advance appearance image information of the custom-made product for every candidate, and storing in advance interior specifications information about interior specifications of the custom-made product; at the customer terminal, displaying, on the display section, a first menu containing the appearance image information about the appearance specifications of all candidates, for selection by a customer, upon receipt from the server, whereupon at least one candidate of the appearance specifications from the first menu on the display section is selected by the customer; and displaying, on the display section, a second menu containing all kinds of the interior specifications information corresponding to the selected candidate of the appearance specifications, for selection by the customer, upon receipt from the server.

With this method, it is possible for a customer to select the appearance specification with ease so that a misconception between the appearance of the custom-made product and the customer's prediction is surely avoided because the customer compares the various kinds of appearance image information by viewing them together and selects a desired appearance specification in recognition of its effect on the appearance of the custom-made product.

According to another aspect of the present invention, there is provided a system for displaying specifications information of a custom-made product, comprising a server and a customer terminal, wherein:
the server has a database which stores in advance appearance image information of a prospective
custom-made product for appearance specifications related to the appearance of the prospective
custom-made product, and which have a plurality of candidates for forthcoming selection, the database also storing in advance interior specifications information about interior specifications of the prospective
custom-made product for forthcoming selection; the customer terminal is communicably connected to the server and has a display section for displaying various kinds of information; the server reads out a plurality of kinds of the appearance image information, as the candidates of the appearance specifications, from the database and transmits the read-out candidates of the appearance specifications to the customer terminal for displaying on the display section as a first menu so that a customer selects at least one desired candidate; and the server reads out the interior specifications information from the database, which information corresponds to the selected candidate of the appearance specifications, and transmits the read-out interior specifications information, which includes a plurality of candidates, to the customer terminal for displaying on the display section as a second menu so that the customer can make a selection.

With this system, this server and this customer terminal for the system, it is possible for a customer to select the appearance specification with ease so that a misconception between the appearances of custom-made product and the customer's prediction can be avoided because the customer compares the various kinds of appearance image information shown together and selects a desired appearance specification in the knowledge of the appearance of the custom-made product.

In another aspect of the present invention, there is provided a method of selecting specifications of a custom-made product, comprising the steps of: displaying, on a display section of the customer terminal, a first menu containing the appearance specifications for every candidate for selection in the first menu by a customer; selecting one candidate from all the candidates of the appearance specifications in the first menu displayed on the display section; displaying, on the display of the customer terminal, a second menu containing all kinds of the interior specifications information corresponding to the selected candidate of the appearance specifications for selection in the second menu by the customer; and selecting desired kinds of the interior specifications from the second menu on the display section by the customer as those of the prospective interior specifications.

With this method, it is possible for a customer to select the appearance specification with ease so that a misconception between the appearances of custom-made product and the customer's prediction can be avoided, because the customer visually compares the various kinds of appearance image information and selects a desired appearance specification knowing how the custom-made product will look.

As a preferable feature, during the displaying of the interior specifications information at the customer terminal, the second menu contains the kinds of the interior specifications and all the candidates for each kind.

With this preferable feature, it is possible for the customer to select each specification with ease while grasping all candidates for individual specifications and considering the balance of the entire custom-made product with reference to the first menu and the second menu, which contains selectable candidates for individual functions and specifications.

As another preferable feature, at the customer terminal, delivery information about an estimated delivery term for every candidate is displayed on the display section upon receipt from the server.

With this preferable feature, it is possible to improve the service to the customer because the customer can select each specification so as to obtain the custom-made product by a predetermined time limit with reference to the delivery information about an estimated delivery term for every candidate on the display section.

As still another preferable feature, after the selecting of the appearance specifications and the interior specifications from the first and second menus, the server creates a confirmation page containing the appearance image information of the prospective custom-made product, which information corresponds to the result of the selecting, and transmits the confirmation page to the customer terminal for displaying on the display section.

With this preferable feature, it is possible for the customer to find an error in the selection for a specification and to avoid ordering a custom-made product having the erroneous specification because the customer confirms the result of selection of the specifications as well as the appearance of the custom-made product with reference to the confirmation page.

As an additional preferable feature, the custom-made product is a personal computer, and the appearance specifications are display specifications.

In these methods and this system, when a customer (a purchase applicant) purchases a custom-made product, various kinds of appearance image information are displayed on the display section of the customer terminal. The customer selects and decides the appearance specification with reference to the display, and then interior specifications information is displayed on the display section. With such a displaying method, it is possible for the customer to look at
kinds of appearance image information concurrently and to select a desired appearance specification grasping and recognizing the appearance of the custom-made product. It is also possible for the customer to select the interior specifications after the selection for the appearance specification.

At that time, it is possible for the customer to refer to all the selectable specifications and functions from the display of the second menu, containing the kinds of the interior specifications and all the candidates for each kind, so that the customer can recognize all the candidates at once.

It is possible for the customer to select each specification with reference to the display of estimated delivery term for every candidate by displaying delivery information. Namely, when the customer desires to obtain a custom-made product by a predetermined time limit, the customer can select each specification so as to obtain the custom-made product by the time limit with reference to the displayed estimated delivery term.

The customer can confirm the result of selection for each specification as well as the appearance of the custom-made product with reference to the a confirmation page containing the appearance image information of the prospective custom-made product, which information corresponds to the result of the selecting of the appearance specifications and the interior specifications.

Reference will now be made, by way of example only, to the accompanying drawings in which:
FIG. 1 is a block diagram schematically showing a system for displaying custom-made product specifications according to a first embodiment of the present invention;
FIG. 2 is a diagram schematically showing specifications information (both interior specifications information and appearance specifications information) previously stored in a commodity database;
FIG. 3 is a diagram schematically showing the appearance specifications information (appearance image information) previously stored in the commodity database;
FIG. 4 is a flowchart illustrating a procedure of displaying custom-made product specifications information by a manufacturer server;
FIG. 5 is a flowchart illustrating a purchase procedure by a purchase applicant (customer) employing a customer terminal;
FIG. 6 is a diagram showing a top menu screen;
FIG. 7 is a diagram showing a commodity-type selecting screen;
FIG. 8 is a diagram showing a commodity-image selecting screen;
FIG. 9 is a diagram showing a commodity-specification selecting screen;
FIG. 10 is a flowchart illustrating a purchase procedure by a purchase applicant (customer) employing a customer terminal according to a second embodiment of the present invention;
FIG. 11 is a diagram showing a commodity-specification selecting screen according to the second embodiment; and
FIG. 12 is a diagram showing a specification-confirming screen according to the second embodiment.

In the illustrated embodiments, it is assumed that a commodity (a custom-made product) which is put on the market via the Internet is a personal computer (hereinafter also called a PC) having various accessories (e.g., a printer, a memory, a hard disk apparatus, and an auxiliary memory (MO drive, DVD-ROM drive)).

### (1) First Embodiment:

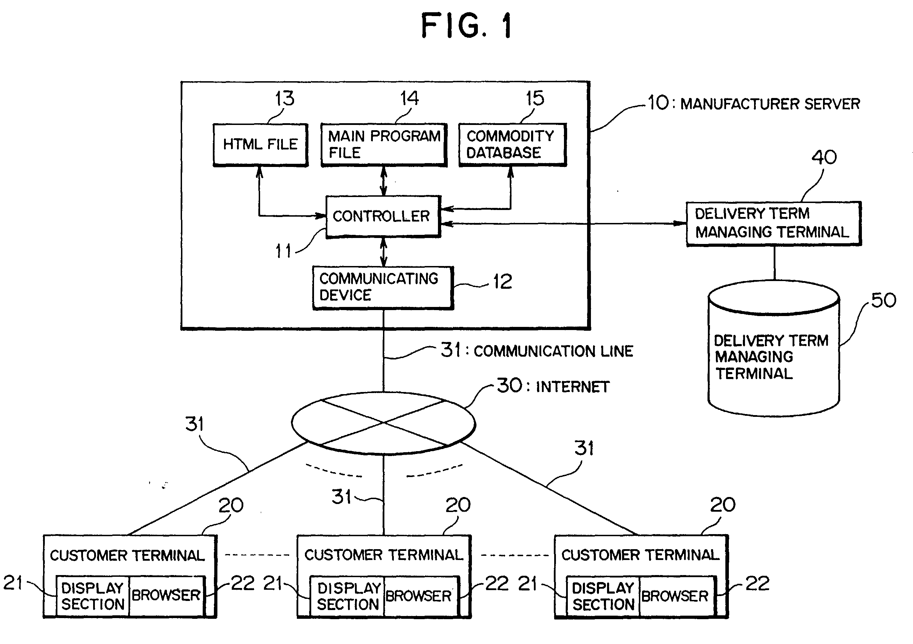

FIG. 1 is a block diagram schematically showing a system for displaying custom-made product specifications according to a first embodiment. The system is, as shown in FIG. 1, in the form of a computer network and includes a manufacturer server 10, customer terminals 20, and the Internet 30. Here, the server is called a manufacturer server to denote that it belongs to a supplier of the commodity rather than to the customer. It need not be owned or operated by the actual manufacturer of the commodity.

The manufacturer server 10 and plural customer terminals (hereinafter simply called terminals) 20 are respectively connected to the Internet 30 via communication lines 31 and can communicate with one another.

The manufacturer server 10 provides a commodity-marketing site on the Internet. As described later, the manufacturer server 10 includes an HTML file 13 for the Internet commodity-market site, a main program file 14 and a commodity database 15. The manufacturer server 10 is also connected to a delivery term managing database 50 via a delivery term managing terminal 40.

The individual customer terminal 20 represents a personal computer of a user (customer, purchase applicant) and is equipped with a non-illustrated controller (e.g., CPU), a display section 21 in the form of a CRT display, an LCD display etc., and a non-illustrated inputting device exemplified by a keyboard, or a mouse to be operated by the user. A browser 22 is installed in the individual terminal 20 so as to obtain an HTML file from the manufacturer server 10 and then display the obtained file on the display section 21.

The manufacturer server 10 includes a controller 11, a communicating device 12, the HTML file 13, the main program file 14, and the commodity database 15. Further, the manufacturer server 10 is connected to the delivery term managing database 50 via the delivery term managing terminal 40.

The controller 11, which consists of a CPU or the like (not shown), controls reading/transferring files and various devices in the manufacturer server 10, retrieves the commodity database 15, and processes various arithmetic operations.

The communicating device 12 controls the transmitting/receiving of files. For example, the communicating device 12 transfers data to the controller 11 upon receipt of the data from the terminal 20 via the communication lines 31 and the Internet 30. Meanwhile, the communicating device 12 also transmits a file transferred from the controller 11 to the customer terminals 20.

In the illustrated embodiment, the following files (1), (2) are stored in a predetermined storing device of the manufacturer server 10.
(1) The HTML file 13, which is a file of plural pages consisting of the Internet commodity-market site, is described in the HTML (Hyper Text Markup Language).
(2) The main program file 14, which is executed by the non-illustrated CPU, composes the controller 11. The main program file 14 includes programs for reading the HTML file 13 for transfer to the terminals 20, processing data from the terminals 20, retrieving the commodity database 15, and embedding the retrieval result into the HTML file 13.

The commodity database 15 stores attribute information with respect to all the commodities to be marketed in the commodity-market site.

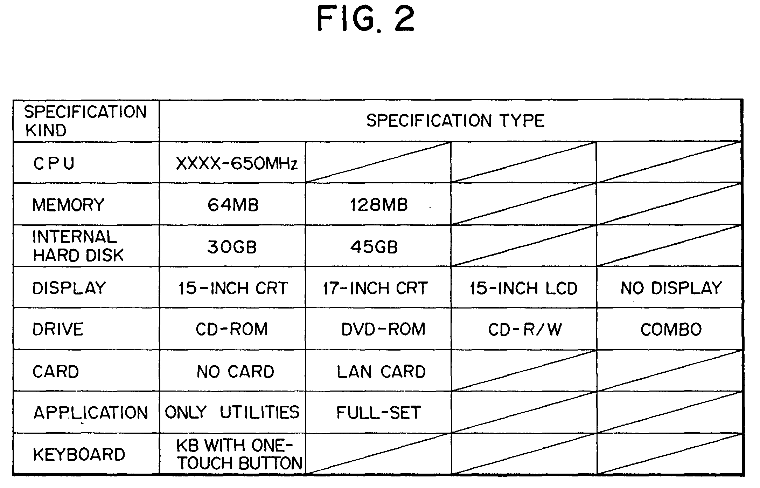

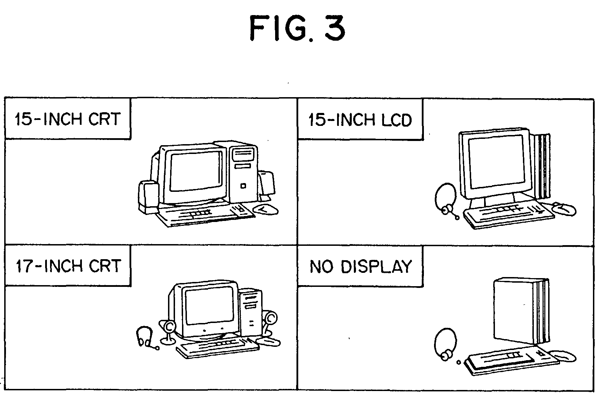

It is assumed that the custom-made product is a personal computer, its attribute information is a price, a form (desktop type or notebook type), various items of specifications information, etc. The various items of specifications information are types of CPU, capacities of memory and hard disk, types of display, and whether or not a CD-ROM drive or DVD-ROM drive is installed. The various items of specifications information will be described later in more detail with reference to FIGS. 2 and 3.

The commodity database 15 is loaded in advance with appearance image information of the custom-made products (personal computers in the illustrated example) for every candidate, which information indicates appearance specifications (types of a display in the illustrated example) which have an effect on the appearance of the prospective custom-made product and have a plurality of candidates for forthcoming selection. The commodity database 15 is also loaded with interior specifications information about interior specifications (type of a CPU, capacities of a memory and a hard disk in the illustrated example) of the custom-made product (not affecting the appearance).

The specification information of the illustrated embodiment will now be described with reference to FIGS. 2 and 3. FIG. 2 is a diagram schematically showing the specification information (both interior specification information and appearance specification information), and FIG. 3 is a diagram schematically showing the appearance specification information (the appearance image information). Both the interior specification information and the appearance specification information have been previously stored in the commodity database 15.

In the commodity database 15 of the manufacturer server 10 of the illustrated embodiment, data with respect to functions (specifications) of each one of the custom-made products is stored so as to retain the data in the separated form of specification kinds and specification types. The specification types are candidates of each specification kind to be selected.

The specification kinds shown in FIG. 2 are "CPU", "memory", "internal hard disk", "display", "drive", "card", "application" and "keyboard". The specification types (possible alternatives) of various specification kinds are as follows: the CPU has one type of "XXXX-650MHz"; the memory has two types of "64MB" and "128MB"; the internal hard disk has two types of "30GB" and "45GB"; the display has four types of "15-inch CRT", "17-inch CRT", "15-inch LCD" and "No display"; the drive has four types, "CD-ROM", "DVD-ROM", "CD-R/W" and "Combo"; the card has two options, namely "No card" and "LAN card"; the application has two types, "Only utilities" and "Full-set"; the keyboard has one type, "KB with a one-touch button". Among the various items of specifications information of FIG. 2, the display is the only appearance specification which influences the overall appearance of the custom-made PC in this example, and there are four different options from which the selection is to be made. The other specification kind information is interior specifications of the prospective custom-made PC. In the presence of only one possible candidate, a specification kind cannot be selected from candidates other than the registered one.

The commodity database 15 in the manufacturer server 10, as shown in FIG. 3, stores and retains appearance image information (pictures of the appearances and installation images), which are combinations of the body of a PC and every one of the four display types of "15-inch CRT", "17-inch CRT", "15-inch LCD" and "No display", with respect to all commodities.

The delivery term managing terminal 40 is usually operated when a salesperson in charge of commodity is connected to the delivery term managing database 50, which manages the delivery terms of commodities, parts of the commodities and software. The delivery term managing database 50 is connected to the manufacturer server 10 via the delivery term managing terminal 40. As a result, the controller 11 in the manufacturer server 10 reads individual delivery terms of various specification types (possible alternatives), which are registered in the commodity database 15, from the delivery term managing database 50.

The manufacturer server 10 of the illustrated embodiment reads out various kinds of the appearance image information (FIG. 3) from the commodity database 15 to transmit the read-out information to the terminals 20, and then displays a first menu including the various kinds of the appearance image information on the display section 21. The manufacturer server 10 also reads out interior and exterior specifications information, (FIG. 2), from the commodity database 15 corresponding to the selected candidate of the appearance specification information in the customer terminal 20.
The read-out specifications information is then transmitted to the customer terminals 20, and displayed
on the display section 21. At that time, the manufacturer server 10 reads out information with respect to the delivery term (time to delivery) of each candidate from the delivery term managing database 50 to transmit the read-out information of the delivery term to the customer terminal 20, and then display the delivery terms on the display section 21.

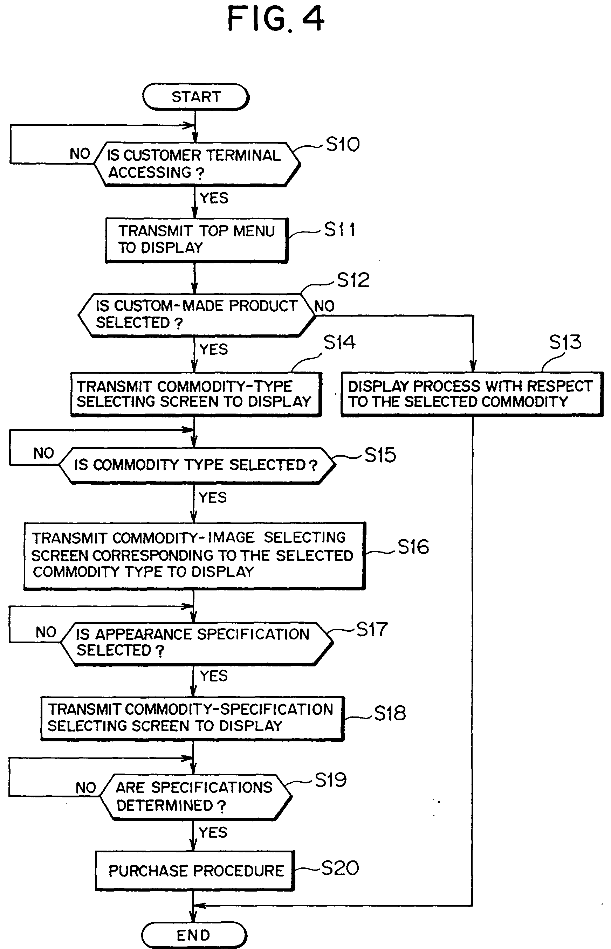

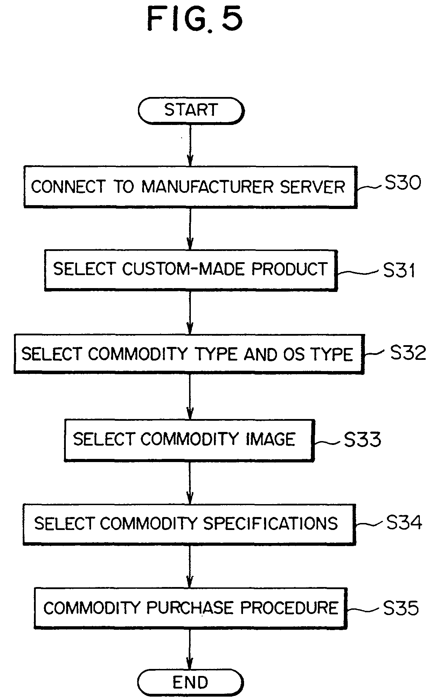

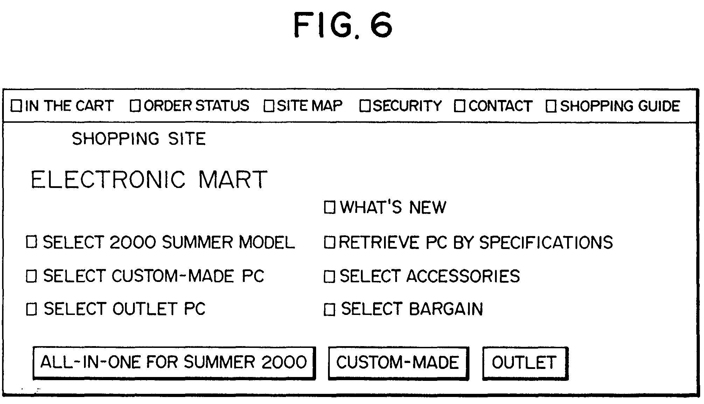

The performance of the system of the illustrated embodiment of FIGS. 1 through 3 will now be described with reference to FIGS. 4 through 9. FIG. 4 is a flowchart illustrating a procedure of displaying custom-made product specifications information by a manufacturer server (Steps S10 through S20); FIG. 5 is a flowchart illustrating a purchase procedure by a purchase applicant (a customer) employing a customer terminal (Steps S30 through S35); FIGS. 6 through 9 are diagrams respectively showing a top menu screen, a commodity-type selecting screen, a commodity-image selecting screen and a commodity-specification selecting screen. The procedure of displaying specification information and the purchase procedure by a purchase applicant (specification selecting procedure) of the illustrated embodiment will be described in parallel using FIGS. 4 and 5.

A purchase applicant (customer, user), when purchasing a custom-made PC, connects the terminal 20 to the manufacturer server 10 via the communication line 31 and the Internet 30 so as to access the commodity-market site (Step S30 in FIG. 5).

The manufacturer server 10 transmits a part of the HTML file 13 corresponding to the top menu screen shown in FIG.6 in response to the access from the terminal 20 (YES route of Step S10 in FIG. 4), and displays the top menu screen on the display section 21 in the terminal 20 (Step S11 in FIG. 4).

The purchase applicant looks at the top menu screen on the display section 21 and then clicks to select "SELECT CUSTOM-MADE PC" or "CUSTOM-MADE" thereon (Step S31 in FIG. 5).

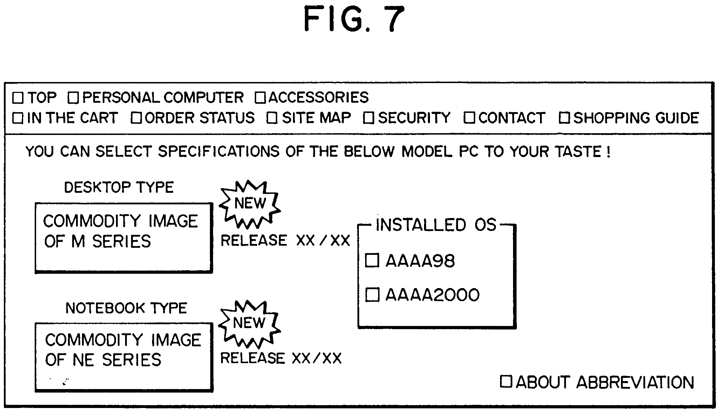

When the purchase applicant selects a commodity other than "CUSTOM-MADE" in the terminal 20 (NO route of Step S12 in FIG. 4), the manufacturer server 10 changes the display mode with respect to the selected commodity (an all-in-one commodity or an outlet) (Step S13 in FIG. 4). On the other hand, when the purchase applicant selects "CUSTOM-MADE" in the terminal 20 (YES route of Step S12 in FIG. 4), the manufacturer server 10 transmits a part of HTML file 13 corresponding to a commodity-type selecting screen shown in FIG. 7 to the terminal 20 and then displays the commodity-type selecting screen at the display section 21 in the customer terminal 20 (Step S14 in FIG. 4). As a result, the display section 21 displays types of custom-made PC, which are combinations of various specifications (functions, types of specifications) selectable by the purchase applicant.

The commodity-type selecting screen in FIG. 7 displays two candidates, i.e., "DESKTOP TYPE" and "NOTEBOOK TYPE", as types of the custom-made PC with their typical images attached. Other two types, i.e., "AAAA98" and "AAAA2000", are also displayed as candidates for an OS (Operating System) to be installed.

The purchase applicant looks at the commodity-type selecting screen on the display section 21, and then selects one type of PC among the displayed custom-made products and one type of OS, which will be installed in the custom-made PC (Step S32 in FIG. 5). In the illustrated example, it is assumed that a "DESKTOP TYPE" PC and an OS of "AAAA98" are selected in the commodity-type screen of FIG. 7.

A type of OS, which is an interior specification of a PC, has to be selected upon selecting a commodity-type due to a license between a PC maker and an OS producing corporation (e.g.,MicrosoftCorporation). Such a license forces a PC maker to manage identifications of commodities with respect to individual OSs. Under such a restriction, if a type of OS is selected at the same time as other interior specifications are selected (at Step S34 in FIG. 5), the processes of retrieving and selecting of various specifications takes longer because two identifications, i.e., identifications corresponding to "AAAA98" and "AAAA2000" respectively, have to be retained and managed until a type of OS is decided. As a solution, a type of OS is selected to decide the identification at first thus preventing slowing down a subsequent process.

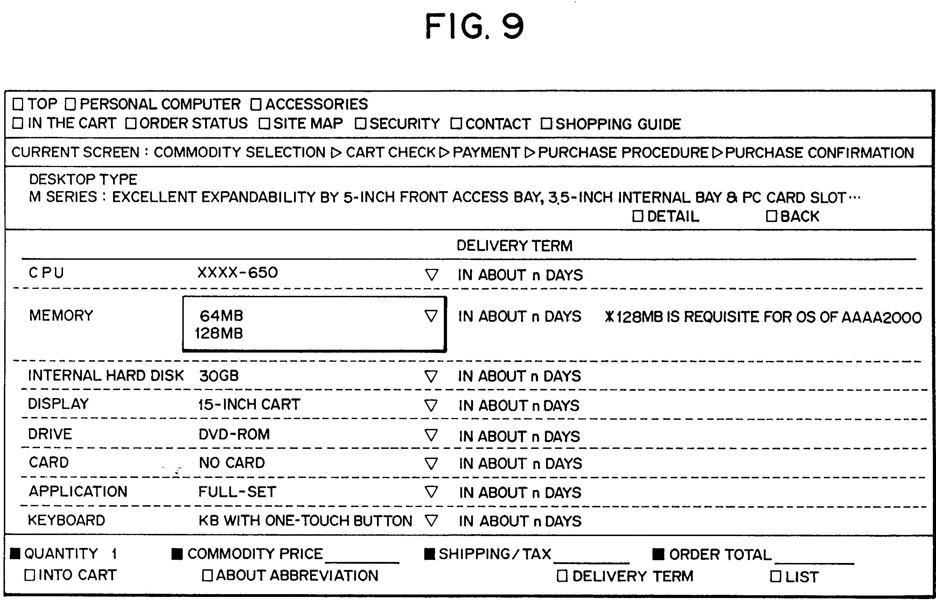

If a purchase applicant can select a commodity free from such restriction, a type of OS is selected as one of the interior specifications with reference to the commodity-specification screen of FIG. 9.

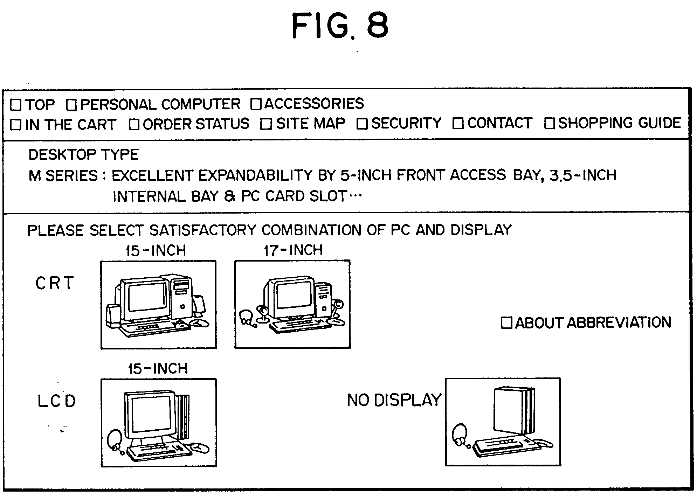

In response to the selection of a type of the commodity and the OS by the terminal 20, the manufacturer server 10 transmits a part of HTML file 13 corresponding to the commodity-image selecting screen of FIG. 8 in accordance with the selected commodity type to the terminal 20 (YES route of Step S15 in FIG. 4) to display the commodity image on the display 21 of the customer terminal 20 (Step S16 in FIG. 4; appearance-specification information displaying step). The HTML file 13 also includes a plurality of items of appearance image information stored in the commodity database 15. As a result, the display section 21 on the terminal 20 displays at once the first menu, which contains various appearance image information about appearances of combinations of the body of the PC and a display, which is one of the commodity specifications. In the illustrated embodiment, the fist menu contains four kinds of appearance image information (pictures of an appearance and an installation image), whichare combinations of a body of a PC and any one of four types of display, namely "15-inch CRT", "17-inch CRT", "15-inch LCD" and "No display".

The purchase applicant selects a display type among the candidates of the display with reference to the first menu, containing four kinds of appearance images in the commodity-image selecting screen on the display section 21 (Step S33 in FIG. 5; appearance specification selecting step). In the illustrated embodiment, it is assumed that the purchase applicant selects "15-inch CRT" for the display type in the commodity image selecting screen of FIG. 8.

Further, the manufacturer server 10 may read out the estimated delivery term of each display from the delivery term managing database 50 and may display the estimated delivery term along with each of the corresponding appearance images in the commodity-image selecting screen at Step S16 of FIG. 4. With such commodity-image selecting screen, the purchase applicant can select a type of the display considering not only the appearance images but also the estimated delivery term at Step S33 of FIG.5.

In response to the selection of the appearance image, by the terminal 20 (YES route of Step S17 in FIG. 4), the manufacturer server 10 transmits a part of the HTML file 13 corresponding to the commodity-specification selecting screen of FIG. 9 including the specifications information (FIG. 2) stored in the commodity database 15 to the terminal 20, and then displays the commodity-specification selecting screen at the display section 21 of the terminal 20 (Step S18 in FIG. 4; interior specification information displaying step).

The commodity-specification selecting screen includes a plurality of specification kinds (functions) and specification types (candidates) as default values. Each specification type corresponds to one of the specification kinds.

The manufacturer server 10 reads out the estimated delivery term of individual specification types (candidates for forthcoming selection) from the delivery term managing database 50, and displays the read-out estimated delivery terms in the commodity-specification selecting screen. A default value of the display of a specification kind on the display section 21 has been selected at Step S33 as described above.

In the commodity-specification selecting screen of FIG. 9, an estimated delivery term is indicated by a "DELIVERY TERM". Since the delivery terms of individual specifications are displayed as "IN ABOUT n DAYS", the terms of all specification kinds may be not identical. The delivery term of the custom-made PC conforms to the latest day (the largest *n*) among those of all the selected specification kinds.

The purchase applicant selects a specification type with respect to every specification kind (interior specifications and exterior specifications) with reference to a commodity-specification selecting screen on the display section 21 (Step S34 in FIG. 5; interior specification selecting step) . When the applicant confirms candidates with respect to a specification kind to change a forthcoming selection, the purchase applicant clicks a selecting button (a button of ∇ in FIG. 9), which is designated by each specification kind, to display candidates in the form of a pull-down menu and then selects one candidate with respect to the specification type. As one example, a pull-down menu with respect to the memory is shown in FIG. 9.

In the commodity-specification selecting screen of FIG. 9, "XXXX-650MHz" is selected as the CPU; "30GB", as the internal hard disk; "15-inch CRT", as the display; "DVD-ROM", as the drive; "No card", as the card; "Full-set", as the application; and "KB with a one-touch button", as the keyboard. The purchase applicant can change the display type, which has been selected at Step S33, to another display type in the commodity-specification selecting screen of FIG. 9. Alternatively, the appearance image (an installation image) based on the selection at Step S33 may be displayed on the commodity-specification selecting screen of FIG. 9. Further, if all specification types with respect to every specification kind to be displayed exceed the capacity of the display on the commodity-specification selecting display at once, part of the information is displayed at once while other part of the information can be seen by scrolling the position of the displaying screen.

When the purchase applicant finishes selecting built-in parts (interior specifications), except for the display, according to the above-described manner so that the contents of the commodity are determined, the manufacturer server 10 transmits a part of the HTML file 13 corresponding to a purchasing procedure screen (not shown) to the terminal 20 in response to the determination command from the customer terminal 20 (YES route of Step S19 in FIG. 4) to display on the display section 21 of the terminal 20, and changes the mode to a purchase procedure (Step S20 in FIG. 4). Subsequently, the purchase applicant completes the purchase procedure with reference to the non-illustrated purchase procedure screen on the display section 21 (Step S35 in FIG. 5).

In the illustrated embodiment, when purchasing a custom-made PC, the display section 21 in the terminal 20 displays the first menu, containing various kinds of appearances of combinations of a display and a body of the PC. Then the purchase applicant selects and determines an appearance specification with reference to the screen (commodity-image selecting screen), whereupon the display section 21 displays a second menu, containing the interior specifications information for the selection for the interior specifications of the body of PC.

As a result, the purchase applicant selects a type of a display, which has an effect on the overall appearance of the complete PC with reference to various kinds of appearances and installation images at the same time for comparison. Partly since the purchase applicant views the actual appearance, and partly since the purchase applicant easily selects an appearance specification of the custom-made product with trust, it is possible to prevent a misconception between the actual appearance of the purchased commodity and the candidate's expectation.

Since the estimated delivery terms with respect to individual candidates are displayed in the commodity-specification selecting screen, it is possible for the purchase applicant to decide specifications considering the estimated delivery terms on the display section 21. Namely, when the purchase applicant desires to obtain a custom-made PC by a predetermined time limit, the purchase applicant can select each specification so as to obtain the PC by the time limit with reference to the estimated delivery term. As a result, it is possible to greatly improve service to the customers (purchase applicants).

### (2) Second Embodiment:

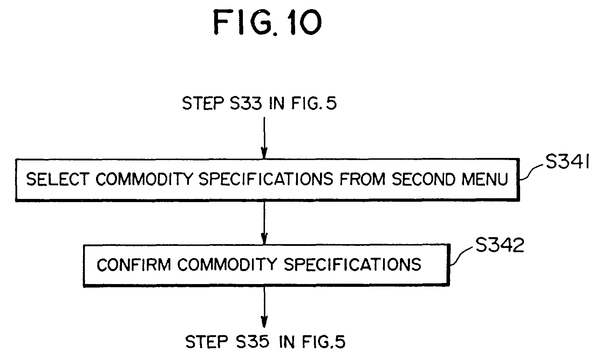

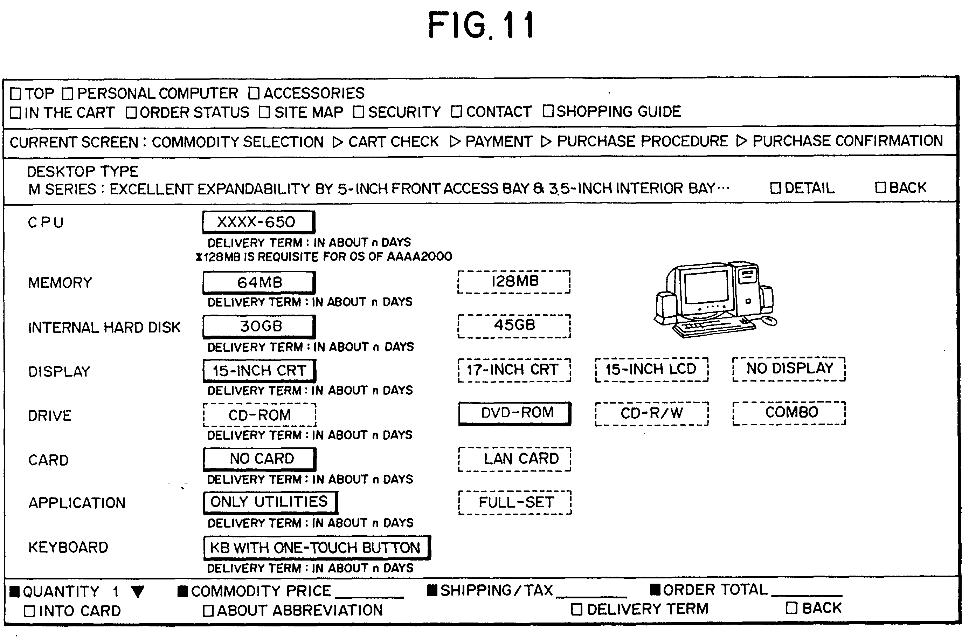

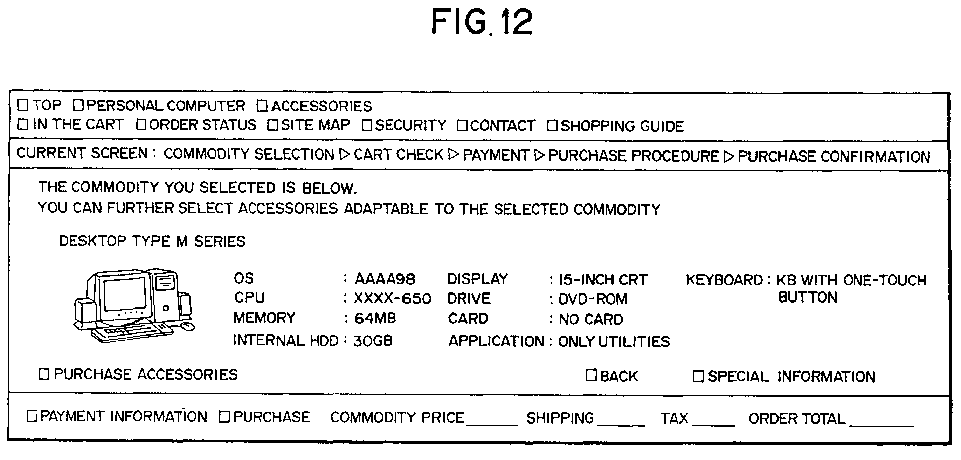

A second embodiment will now be described with reference to FIGS. 10 through 12. FIG. 10 is a flowchart illustrating a purchase procedure by a purchaseapplicant(acustomer)employing a customer terminal (Steps S341, S342); FIGS. 11 and 12 are diagrams respectively showing a commodity-specification selecting screen, and a specification-confirming screen. Steps S341 and S342 in FIG. 10 are executed as a substitution for Step S34 in FIG. 5.

In the second embodiment, the manufacturer server 10 is operable to display a commodity-specification selecting screen of FIG. 11 on the display section 21 as a substitution for the commodity-specification selecting screen of FIG. 9. Namely, when displaying specifications information including interior specifications information, the manufacturer server 10 displays the second menu, containing interior and exterior specification kinds and all the candidates (i.e., specification types) for each kind on the display section 21.

Further, the manufacturer server 10 produces an order-confirming screen, exemplified by FIG. 12, in accordance with the selection by the customer, and transmits the screen to the terminals 20 for display on the display section 21. After the purchase applicant finishes selecting each specification type, the manufacturer server 10 retrieves a commodity having a combination of specifications selected by the purchase applicant, and displays the result of the retrieving.

The performance of the system of the second embodiment will now be described. At Step S18 in FIG. 4, the manufacturer server 10 transmits a part of the HTML file 13 corresponding to the commodity-specification selecting screen shown in FIG. 11 to the terminal 20, and then displays the commodity-specification selecting screen.

As a result, since the display section 21, as shown in FIG. 11, displays the second menu containing the specification kind and all the specification types (FIG. 2) in the form of a list retained in the commodity database 15, the purchase applicant clicks a desired specification type among those displayed (Step S341 in FIG. 10).

The commodity-specification selecting screen of FIG. 11 displays a status that "XXXX-650MHz" is selected as the CPU; "64MB", as the memory; "30GB", as the internal hard disk; "15-inch CRT", as the display; "DVD-ROM", as the drive; "No card", as the optional card; "Full-set", as the application; and "KB with a one-touch button", as the keyboard. The selected specification types are indicated by emphasized displays. More specifically, the selected specification types are surrounded by solid lines, which are in the form of emphasized display, in FIG. 11.

The manufacturer server 10 also reads out the delivery term of each specification type selected in the commodity-specification selecting screen from the delivery term managing database 50, and then displays them as part of the commodity-specification displaying screen. Alternatively, the manufacturer server 10 may read out delivery terms of not only selected specification types but also all specification types being displayed in the commodity-specification selecting screen of FIG. 11 from the delivery term managing database 50 for display. With this commodity-specification selecting screen, the purchase applicant can see the delivery terms of all types of specification at once.

In the commodity-specification selecting screen of FIG. 11, an estimated delivery term is indicated by a "DELIVERY TERM". Since the delivery terms of individual specifications are displayed as "IN ABOUT n DAYS", the terms of all specification kinds may be not identical. The delivery term of the custom-made PC is governed by the largest *n*.

The purchase applicant can change the display type, which has been selected at Step S33, to another display type in the commodity-specification selecting screen of FIG. 11. Alternatively, the appearance image (an installation image) based on the selection at Step S33 may be displayed on the commodity-specification selecting screen of FIG. 11. Further, if there are too many specification types with respect to any specification kind to show all at once, part of the
information is displayed at once and other part of information can be seen by scrolling the position of the displaying screen. In another alternative, a type of the OS may be selected on the commodity-specification selecting screen of FIG. 11 as one of the interior specifications.

When the purchase applicant finishes selecting built-in parts (interior specifications), except for the display, and the contents of the commodity are determined, the manufacturer server 10 produces a specification-confirming screen as shown in FIG. 12, and transmits the screen, for display prior to the purchase procedure shown at Step S20 in FIG. 4.

The specification-confirming screen contains an appearance image (an installation image) of the display selected at Step A33 in Fig. 5 and all the interior specifications information selected at Step 341 in FIG. 10. Only the interior specification types selected at Step 341 are picked up for being displayed in the specification-confirming display of FIG. 12. As a result, the purchase applicant can confirm the determined specifications together with the appearance image of the commodity referring to the specification-confirmi.ng screen (Step S342 in FIG. 10).

The manufacturer server 10 transmits a part of the HTML file 13 corresponding to the non-illustrated purchasing procedure screen to the terminal 20 in response to the determination command from the customer terminal 20, and then displays the screen
to change the mode to a purchase procedure (Step S20 in FIG. 4). Subsequently, the purchase applicant completes the purchase procedure with reference to the purchase procedure screen (Step S35 in FIG. 5).

As described above, the second embodiment leads to the same advantageous result as the first embodiment. Further, the selectable specification kinds and types are concurrently displayed on the display section 21 of the terminal 20, as shown in FIG. 11, when the purchase applicant selects specifications and functions of the commodity. It is possible for the purchase candidate to select each specification at ease, taking account of the overall appearance of the commodity and considering the balance of function.

Since the display section 21 of the terminal 20, as shown in FIG. 12, displays the specification-confirming screen in accordance with the selections of the individual specifications, the purchase applicant can confirm the selected specifications as well as the appearance of the custom-made product by referring to the specification-confirming screen. As a result, it is easier to detect an error in the selection and prevent a wrong custom-made product from being ordered.

### (3) Modifications:

The present invention should by no means be limited to the first and second embodiments, and various changes or modifications are possible.

For example, in the above example the custom-made products of the illustrated embodiments are PCs, and the selectable specification affecting the appearance of each PC is a display. The present invention should by no means be limited to a PC as a custom-made product. In an alternative, the present invention may be applied to any custom-made product with an option that affects its appearance and/or required function. The alternatives lead to the same advantageous result as the illustrated embodiments. Likewise, the customer terminal need not be a PC. Any kind of information appliance having a graphical display (e.g. personal organiser, mobile phone) may be employed as the customer terminal.

## Claims

1. A method of displaying, on a display section (21) of a customer terminal (20), specifications information about various kinds of specifications of a custom-made product upon receipt of the specifications information from a server (10) via a communications network, said method comprising the steps of:
at the server (10)
(a) for appearance specifications which have an effect on appearance of a prospective custom-made product and have a plurality of candidates for forthcoming selection, storing in advance appearance image information of the custom-made product for every candidate; and
(b) storing in advance interior specifications information about interior specifications of the custom-made product;
at the customer terminal (20)
(c) displaying, on the display section (21), a first menu containing the appearance image information about the appearance specifications of all candidates, for selection by a customer, upon receipt from the server (10); whereupon
(d) at least one candidate of the appearance specifications from the first menu on the display section (21) is selected by the customer; and
(e) displaying on the display section (21), a second menu containing all kinds of the interior specifications information corresponding to the selected candidate of the appearance specifications, for selection by the customer, upon receipt from the server (10).

2. A displaying method according to claim 1, wherein during said displaying of the interior specifications information at the customer terminal (20), said second menu contains the kinds of the interior specifications and all the candidates for each kind.

3. A displaying method according to claim 1 or 2, wherein at the customer terminal (20), delivery information about an estimated delivery term for every candidate is displayed on the display section (21) upon receipt from the server (10).

4. A displaying method according to claim 1, 2 or 3, wherein after the customer has selected the appearance specifications and the interior specifications from the first and second menus, the server (10) creates a confirmation page containing the appearance image information of the prospective custom-made product, which information corresponds to the result of said selecting, and transmits the confirmation page to the customer terminal (20) for displaying on the display section (21).

5. A displaying method according to claim 1, 2, 3 or 4, wherein the custom-made product is a personal computer, and the appearance specifications are display specifications.

6. A system for displaying specifications information of a custom-made product, said system comprising:
a server (10) having a database (15) which stores in advance appearance image information of a prospective custom-made product for appearance specifications related to the appearance of the prospective custom-made product, and which have a plurality of candidates for forthcoming selection, said database (15) also storing in advance interior specifications information about interior specifications of the prospective custom-made product for forthcoming selection; and
a customer terminal (20) communicably connected to said server (10) and having a display section (21) for displaying various kinds of information; wherein:
said server (10) reads out a plurality of kinds of the appearance image information, as the candidates of the appearance specifications, from said database (15) and transmits the read-out candidates of the appearance specifications to said customer terminal (20) for displaying on said display section (21) as a first menu so that a customer selects at least one desired candidate; and
said server (10) reads out the interior specifications information from said database (15) which information corresponds to the selected candidate of the appearance specifications, and transmits the read-out interior specifications information, which includes a plurality of candidates, to said customer terminal (20) for displaying on said display section (21) as a second menu so that the customer can make a selection.

7. A displaying system according to claim 6, wherein during the displaying of the interior specifications information at said customer terminal (20), said server (10) displays, on said display section (21) of said customer terminal (20), said second menu which contains the kinds of the interior specifications and all the candidates for each kind.

8. A displaying system according to claim 6 or 7, wherein said server (10) transmits delivery information about an estimated delivery term for every candidate to said customer terminal (20) for displaying on said display section (21).

9. A displaying system according to claim 6, 7 or 8, wherein after the appearance specifications and the interior specifications have been selected from the first and second menus, said server (10) creates a confirmation page containing the appearance image information of the prospective custom-made product, corresponding to the selected specifications, and transmits the confirmation page to said customer terminal (20) for displaying on said display section (21).

10. A server (10), adapted to be communicably connected with a customer terminal (20) for use in a system for displaying specifications information of a custom-made product on a display section (21) of the customer terminal (20), wherein:
said server (10) has a database (15) which stores in advance appearance image information, of a prospective custom-made product, for appearance specifications related to the appearance of the prospective custom-made product and which have a plurality of candidates for forthcoming selection, said database (15) also storing in advance interior specifications information about interior specifications of the prospective custom-made product for forthcoming selection;
said server (10) reads out a plurality of kinds of the appearance image information, as the candidates of the appearance specifications, from said database (15) and transmits the read-out candidates of the appearance specifications to said customer terminal (20) for displaying on said display section (21) as a first menu so that a customer can select at least one desired candidate; and
said server (10) reads out the interior specifications information from said database (15), which information corresponds to the selected candidate of the appearance specifications, and transmits the read-out interior specifications information, which includes a plurality of candidates, to said customer terminal (20) for displaying on said display section (21) as a second menu so that the customer can make selections.

11. A server (10) according to claim 10, wherein during the displaying of the interior specifications information at said customer terminal (20), said server (10) displays, on said display section (21) of said customer terminal (20), said second menu which contains the kinds of the interior specifications and all the candidates for each kind.

12. A server (10) according to claim 10 or 11, wherein said server (10) transmits delivery information about an estimated delivery term for every candidate to said customer terminal (20) for displaying on said display section (21).

13. A server (10) according to claim 10, 11 or 12, wherein after the appearance specifications and the interior specifications have been selected from the first and second menus, said server (10) creates a confirmation page containing the appearance image information of the prospective custom-made product, corresponding to the selected specifications, and transmits the confirmation page to said customer terminal (20) for displaying on said display section (21).

14. A customer terminal (20), adapted to be communicably connected with a server (10), for use in a system for displaying specifications information of a custom-made product on a display section (21) of the customer terminal (20), wherein:
said customer terminal (20) has a display section (21) for displaying various kinds of information;
said display section (21) displays a first menu containing appearance image information of a prospective custom-made product for appearance specifications which are related to the appearance of the prospective custom-made product and have a plurality of candidates, said appearance image information of the individual candidates being received from said server (10) for selection from the displayed first menu by a customer; and
said display section (21) also displays a second menu containing interior specifications information about interior specifications of the prospective custom-made product, said interior specifications information corresponding to the selected candidate of the appearance specifications and being received from said server (10) for selection in the second menu by the customer.

15. A customer terminal (20) according to claim 14, wherein during the displaying of the interior specifications information at said customer terminal (20), said display section (21) displays said second menu which contains the kinds of the interior specifications and all the candidates for each kind.

16. A method of selecting specifications of a custom-made product, wherein said method comprises the steps of:
(a) transmitting, from a server (10) to a customer terminal (20), appearance image information of a prospective custom-made product for appearance specifications which are related to the appearance of the prospective custom-made product and have a plurality of candidates, and displaying, on a display section (21) of the customer terminal (20), a first menu containing the appearance specifications for every candidate for selection in the first menu by a customer;
(b) selecting one candidate from all the candidates of said appearance specifications in the first menu displayed on the display section (21),
(c) transmitting, from the server (10) to the customer terminal (20), various kinds of interior specifications information about interior specifications of the prospective custom-made product, and displaying, on the display of the customer terminal (20), a second menu containing all kinds of said interior specifications information corresponding to the selected candidate of the appearance specifications for selection in the second menu by the customer; and
(d) selecting desired kinds of the interior specifications from the second menu on the display section (21) by the customer as those of the prospective interior specifications.

17. A method according to claim 16, wherein during the second-named displaying step of displaying the interior specifications information, said second menu contains all kinds of the interior specifications and all the candidates of the appearance specifications.

18. A selecting method according to claim 16 or 17, wherein during the first-named displaying step of displaying the appearance specifications information and said second-named displaying step of displaying the interior specifications information, delivery information about an estimated delivery term for every candidate is displayed on the display section (21) upon receipt from the server (10).

19. A selecting method according to claim 16, 17 or 18, wherein after said selecting of the appearance specifications and the interior specifications from the first and second menus during said first- and second-named displaying steps, the server (10) creates a confirmation page containing the appearance image information of the prospective custom-made product, corresponding to the selected information, and transmits the confirmation page to the customer terminal (20) for displaying on the display section (21).

20. A selecting method according to claim 16, 17, 18 or 19, wherein the custom-made product is a personal computer, and the appearance specifications are display specifications.

21. A method, a system, a server or a terminal according to any preceding claim, wherein the server is a manufacturer server.
